# EUROPEAN PATENT APPLICATION

(11) **EP 4 574 899 A1**
(43) Date of publication of application: **25.06.2025**
(21) Application number: 23854828.3
(22) Date of filing: 07.08.2023
(51) Int. Cl.: C08L 53/02, B32B 27/32, C08F 8/46, C08L 45/00, C09J 7/30, C09J 11/08, C09J 201/00

(54) **LOW DIELECTRIC RESIN COMPOSITION, ADHESIVENESS IMPARTING AGENT, LOW DIELECTRIC ADHESIVE COMPOSITION, LOW DIELECTRIC ADHESIVE MOLDED ARTICLE, LOW DIELECTRIC ADHESIVE AND MULTILAYER BODY**

(30) Priority: 15.08.2022 JP 2022129202
(71) Applicant: Mitsui Chemicals, Inc., Tokyo 104-0028 (JP)
(72) Inventor: SAKAMOTO, Natsuki, Sodegaura-shi, Chiba 299-0265 (JP); HIROTA, Yoshihito, Sodegaura-shi, Chiba 299-0265 (JP)
(74) Representative: Hoffmann Eitle
(86) International application number: PCT/JP2023/028788
(87) International publication number: WO 2024/038794

(57) **Abstract**

Alow dielectric resin composition includes a polyolefin-based resin. The polyolefin-based resin includes a styrene-based elastomer (A) and a cyclic olefin-based polymer (B) having an alicyclic ring in a main chain. A content ratio of the styrene-based elastomer (A) is 30 parts by mass or more and 89 parts by mass or less with respect to 100 parts by mass of the total amount of the styrene-based elastomer (A) and the cyclic olefin-based polymer (B).

## Description

### TECHNICAL FIELD

The present invention relates to a low dielectric resin composition, an adhesiveness-imparting agent, a low dielectric adhesive composition, a low dielectric adhesive molded product, a low dielectric adhesive, and a laminate.

### BACKGROUND ART

A wiring circuit board includes, for example, a resin layer (insulating layer) containing a thermosetting resin and a conductive layer containing a metal. The wiring circuit board is widely used in various industrial fields.

Recently, in the wiring circuit board, it is required that the resin layer (insulating layer) is directly bonded to the conductive layer. Therefore, it is proposed that an adhesiveness-imparting agent is added to the resin layer (insulating layer) to impart adhesiveness to the resin layer (insulating layer).

As the adhesiveness-imparting agent, for example, a resin having the relatively high adhesiveness and a relatively low dielectric constant is used. As such a resin, for example, a low dielectric constant resin below is proposed. Examples of the low dielectric constant resin include maleic anhydride graft-modified resins. As the maleic anhydride graft-modified resin, a maleic anhydride graft (styrene-ethylene-butylene-styrene) block copolymer is used alone or a maleic anhydride graft cyclic olefin copolymer is used alone (ref: for example, Patent Document 2 (Example 1 and Example 4)).

Further, in the wiring circuit board, it is also required that the resin layer (insulating layer) and the conductive layer are bonded by an interlayer adhesive instead of being directly bonded to each other.

As the interlayer adhesive, for example, the resin having the relatively high adhesiveness and the relatively low dielectric constant is also used. For example, the following resin is proposed. That is, the resin includes a mixture of a maleic acid-modified propylene-1-buten copolymer and a maleic acid-modified styrene-ethylene-propylene-styrene copolymer. More specifically, the above-described resin is produced by modifying a mixture of a propylene-1-buten copolymer and a styrene-ethylene-propylene-styrene copolymer with a maleic acid (ref: for example, Patent Document 1 (Production Example 5 and Example 1)).

### Citation List

### Patent Document

Patent Document 1: Japanese Unexamined Patent Publication No. 2018-154823
Patent Document 2: Japanese Unexamined Patent Publication No. 2022-043966

### SUMMARY OF THE INVENTION

### PROBLEM TO BE SOLVED BY THE INVENTION

On the other hand, further excellent heat resistance is required for the adhesiveness-imparting agent and the interlayer adhesive.

Further, the adhesiveness-imparting agent is mixed with the thermosetting resin, thereby forming the resin layer (insulating layer). Therefore, an improvement in affinity (compatibility) for the thermosetting resin is required for the adhesiveness-imparting agent.

Further, excellent adhesion to the resin layer (insulating layer) is required for the interlayer adhesive. Therefore, the improvement in the affinity (adhesion) for the thermosetting resin is also required for the interlayer adhesive.

The present invention provides a low dielectric resin composition, an adhesiveness-imparting agent, a low dielectric adhesive composition, a low dielectric adhesive molded product, a low dielectric adhesive, and a laminate having excellent adhesiveness and an excellent low dielectric property, further having excellent heat resistance, and in addition, having excellent affinity for a thermosetting resin.

### MEANS FOR SOLVING THE PROBLEM

The present invention [1] includes a low dielectric resin composition including a polyolefin-based resin, wherein the polyolefin-based resin includes a styrene-based elastomer (A) and a cyclic olefin-based polymer (B) having an alicyclic ring in a main chain, and a content ratio of the styrene-based elastomer (A) is 30 parts by mass or more and 89 parts by mass or less with respect to 100 parts by mass of the total amount of the styrene-based elastomer (A) and the cyclic olefin-based polymer (B).

The present invention [2] includes the low dielectric resin composition described in the above-described [1], wherein the styrene-based elastomer (A) has a weight average molecular weight of 70000 or more and 110000 or less.

The present invention [3] includes the low dielectric resin composition described in the above-described [1] or [2], wherein the styrene-based elastomer (A) contains a structural unit derived from styrene, and a content ratio of the structural unit derived from the styrene is 10% by mass or more and 40% by mass or less with respect to the total amount of the styrene-based elastomer (A).

The present invention [4] includes the low dielectric resin composition described in any one of the above-described [1] to [3], wherein the styrene-based elastomer (A) does not contain a structural unit derived from butylene.

The present invention [5] includes the low dielectric resin composition described in any one of the above-described [1] to [4], wherein the cyclic olefin-based polymer (B) has a glass transition temperature of 100°C or more and 140°C or less.

The present invention [6] includes the low dielectric resin composition described in any one of the above-described [1] to [5], wherein the polyolefin-based resin is modified by a functional group-containing monomer.

The present invention [7] includes the low dielectric resin composition described in the above-described [6], wherein the functional group-containing monomer includes a carboxy group-containing monomer.

The present invention [8] includes an adhesiveness-imparting agent including the low dielectric resin composition described in any one of the above-described [1] to [7].

The present invention [9] includes a low dielectric adhesive composition including a thermosetting resin and the adhesiveness-imparting agent described in the above-described [8], wherein the thermosetting resin includes at least one kind selected from the group consisting of epoxy resins, polyphenylene ether resins, fluorine resins, polyimide resins, phenol resins, melamine resins, polyolefin resins having an unsaturated double bond, and liquid crystal polymers.

The present invention [10] includes a low dielectric adhesive molded product including a cured product of the low dielectric adhesive composition described in the above-described [9].

The present invention [11] includes a laminate including an insulating layer including the low dielectric adhesive molded product described in the above-described [10] and a conductive layer disposed on at least one surface of the insulating layer.

The present invention [12] includes a low dielectric adhesive including the low dielectric resin composition described in any one of the above-described [1] to [7].

The present invention [13] includes a laminate including an insulating layer, a conductive layer disposed facing the insulating layer, and an adhesive layer disposed between the insulating layer and the conductive layer and bonding the insulating layer to the conductive layer, wherein the adhesive layer includes the low dielectric adhesive described in the above-described [12].

The present invention [14] includes a laminate including a first conductive layer, a second conductive layer disposed facing the first conductive layer, and an adhesive layer disposed between the first conductive layer and the second conductive layer and bonding the first conductive layer to the second conductive layer, wherein the adhesive layer includes the low dielectric adhesive described in the above-described [12].

### EFFECT OF THE INVENTION

The low dielectric resin composition of the present invention includes the polyolefin-based resin as a resin component. Then, the polyolefin-based resin includes the styrene-based elastomer (A) and the cyclic olefin-based polymer (B) having the alicyclic ring in the main chain at a specific ratio. Therefore, the low dielectric resin composition has excellent adhesiveness and an excellent low dielectric property, further has excellent heat resistance, and in addition, has excellent affinity (compatibility and adhesion) for the thermosetting resin.

The adhesiveness-imparting agent, the low dielectric adhesive composition, and the low dielectric adhesive molded product of the present invention include the above-described low dielectric resin composition. Therefore, the adhesiveness-imparting agent, the low dielectric adhesive composition, and the low dielectric adhesive molded product have the excellent adhesiveness and the excellent low dielectric property, further have the excellent heat resistance, and in addition, have the excellent affinity (compatibility and adhesion) for the thermosetting resin.

The laminate of the present invention has the insulating layer. The insulating layer includes the above-described low dielectric adhesive molded product. Therefore, in the laminate, the insulating layer has the excellent adhesiveness and the excellent low dielectric property, further has the excellent heat resistance, and in addition, has the excellent affinity (compatibility and adhesion) for the thermosetting resin.

The low dielectric adhesive of the present invention includes the above-described low dielectric resin composition. Therefore, the low dielectric adhesive has the excellent adhesiveness and the excellent low dielectric property, further has the excellent heat resistance, and in addition, has the excellent affinity (compatibility and adhesion) for the thermosetting resin.

Further, the laminate of the present invention has the adhesive layer. The adhesive layer includes the above-described low dielectric adhesive. Therefore, in the laminate, the adhesive layer has the excellent adhesiveness and the excellent low dielectric property, further has the excellent heat resistance, and in addition, has the excellent affinity (compatibility and adhesion) for the thermosetting resin.

### BRIEF DESCRIPTION OF THE DRAWINGS

FIG. 1 shows a schematic view showing a copper-clad laminate board as a first embodiment of a laminate.
FIG. 2 shows a schematic view showing a circuit board as a second embodiment of a laminate.
FIG. 3 shows a schematic view showing a copper-clad laminate board as a third embodiment of a laminate.
FIG. 4 shows a schematic view showing a circuit board as a fourth embodiment of a laminate.
FIGS. 5 show process views for producing a circuit board as a fifth embodiment of a laminate:
   FIG. 5A illustrating a step of preparing a copper foil with carrier,
   FIG. 5B illustrating a step of forming a first resist layer, and
   FIG. 5C illustrating a step of forming a first conductive layer.
FIGS. 6, subsequent to FIGS. 5, show process views for producing the circuit board:
   FIG. 6D illustrating a step of removing a first resist layer,
   FIG. 6E illustrating a step of removing a copper foil exposed from the first conductive layer,
   FIG. 6F illustrating a step of laminating an adhesive layer, and
   FIG. 6G illustrating a step of laminating the copper foil with carrier on the adhesive layer.
FIGS. 7, subsequent to FIGS. 6, show process views for producing the circuit board:
   FIG. 7H illustrating a step of peeling a carrier layer,
   FIG. 7I illustrating a step of forming a via hole,
   FIG. 7J illustrating a step of forming a via filling, and
   FIG. 7K illustrating a step of forming a second resist layer.
FIGS. 8, subsequent to FIGS. 7, show process views for producing the circuit board:
   FIG. 8L illustrating a step of forming a second conductive layer,
   FIG. 8M illustrating a step of removing the second resist layer,
   FIG. 8N illustrating a step of removing the copper foil exposed from the second conductive layer, and
   FIG. 8O illustrating a step of peeling the carrier layer.

### DESCRIPTION OF EMBODIMENTS

### 1. Low Dielectric Resin Composition

A low dielectric resin composition is, for example, a resin composition contained in an insulating layer (described later) or an adhesive layer (described later) in a laminate to be described later. The low dielectric resin composition contains a polyolefin-based resin.

The polyolefin-based resin contains a styrene-based elastomer (A) and a cyclic olefin-based polymer (B) having an alicyclic ring in a main chain.

### (1) Styrene-Based Elastomer

An example of the styrene-based elastomer (A) includes a copolymer of styrene and a chain olefin.

An example of the chain olefin includes a chain olefin having 2 to 8 carbon atoms. Examples of the chain olefin having 2 to 8 carbon atoms include ethylene, propylene, butylene (butene), pentene, hexene, octene, and 3-methyl-1-pentene. These may be used alone or in combination of two or more. As the chain olefin, preferably, ethylene is used alone, propylene is used alone, and ethylene and propylene are used in combination. As the chain olefin, further more preferably, ethylene and propylene are used in combination.

The styrene-based elastomer (A) is produced by a known method. For example, the styrene and the chain olefin are polymerized in the presence of a known initiator (for example, an alkyl lithium compound). Thus, the styrene-based elastomer (A) is obtained. Polymerization conditions are appropriately set in accordance with its purpose and use.

The styrene-based elastomer (A) contains a structural unit derived from the styrene and a structural unit derived from the chain olefin. Preferably, the styrene-based elastomer (A) consists of the structural unit derived from the styrene and the structural unit derived from the chain olefin.

From the viewpoint of affinity for a thermosetting resin, a content ratio of the structural unit derived from the styrene is, for example, 5% by mass or more, preferably 10% by mass or more, more preferably 15% by mass or more with respect to the total amount of the styrene-based elastomer (A). In addition, from the viewpoint of a low dielectric property, the content ratio of the structural unit derived from the styrene is, for example, 50% by mass or less, preferably 40% by mass or less, more preferably 30% by mass or less with respect to the total amount of the styrene-based elastomer (A).

In addition, from the viewpoint of the low dielectric property, the content ratio of the structural unit derived from the chain olefin is, for example, 50% by mass or more, preferably 60% by mass or more, more preferably 70% by mass or more with respect to the total amount of the styrene-based elastomer (A). In addition, from the viewpoint of the affinity for the thermosetting resin, the content ratio of the structural unit derived from the chain olefin is, for example, 95% by mass or less, preferably 90% by mass or less, more preferably 85% by mass or less with respect to the total amount of the styrene-based elastomer (A).

The content ratio of the structural unit derived from the styrene and the content ratio of the structural unit derived from the chain olefin are calculated based on a mixing formulation of a polymerization raw material of the styrene-based elastomer (A). More specifically, the content ratio of the structural unit derived from the styrene is calculated as a ratio of the styrene to the total amount of the polymerization raw materials (styrene and chain olefin). Further, the content ratio of the structural unit derived from the chain olefin is calculated as the ratio of the chain olefin to the total amount of the polymerization raw materials (styrene and chain olefin).

The styrene-based elastomer (A) preferably contains a structural unit derived from ethylene as the structural unit derived from the chain olefin. The content ratio of the structural unit derived from the ethylene is appropriately set in accordance with its purpose and use.

Further, the styrene-based elastomer (A) preferably contains a structural unit derived from propylene as the structural unit derived from the chain olefin. The content ratio of the structural unit derived from the propylene is appropriately set in accordance with its purpose and use.

Further, the styrene-based elastomer (A) may contain, if necessary, a structural unit derived from butylene as the structural unit derived from the chain olefin. The content ratio of the structural unit derived from the butylene is appropriately set in accordance with its purpose and use.

On the other hand, in the styrene-based elastomer (A), when the content ratio of the structural unit derived from the styrene is relatively low, from the viewpoint of the affinity for the thermosetting resin, preferably, the content ratio of the structural unit derived from the butylene is relatively low.

In other words, when the styrene-based elastomer (A) contains the structural unit derived from the butylene, preferably, the content ratio of the structural unit derived from the styrene is set relatively high.

From the viewpoint of the affinity for the thermosetting resin, when the styrene-based elastomer (A) contains the structural unit derived from the butylene, the content ratio of the structural unit derived from the styrene is, for example, 10% by mass or more, preferably 20% by mass or more, particularly preferably 25% by mass or more with respect to the total amount of the styrene-based elastomer (A). Further, the content ratio of the structural unit derived from the styrene is preferably 90% by mass or less, more preferably 85% by mass or less with respect to the total amount of the styrene-based elastomer (A).

Particularly preferably, the styrene-based elastomer (A) does not contain the structural unit derived from the butylene. More specifically, in the styrene-based elastomer (A), when the content ratio of the structural unit derived from the styrene is below 25% by mass, preferably, the styrene-based elastomer (A) does not contain the structural unit derived from the butylene as the structural unit derived from the chain olefin.

In other words, in the styrene-based elastomer (A), when the content ratio of the structural unit derived from the styrene is relatively high (for example, 25% by mass or more), the styrene-based elastomer (A) may also contain the structural unit derived from the butylene. In addition, when the content ratio of the structural unit derived from the styrene is relatively high, the styrene-based elastomer (A) may not also contain the structural unit derived from the butylene.

From the viewpoint of the affinity for the thermosetting resin, the styrene-based elastomer (A) particularly preferably contains the structural unit derived from the styrene at a ratio of 25% by mass or more and does not contain the structural unit derived from the butylene, or contains the structural unit derived from the styrene at a ratio of 25% by mass or more and contains the structural unit derived from the butylene, or contains the structural unit derived from the styrene at a ratio of below 25% by mass and does not contain the structural unit derived from the butylene.

More specifically, examples of the styrene-based elastomer (A) include styrene-ethylene-propylene copolymers (SEP), styrene-ethylene-propylene-styrene copolymers (SEPS), styrene-ethylene-ethylene-propylene-styrene block copolymers (SEEPS), styrene-butadiene-styrene copolymers (SBS), styrene-ethylene-butylene-styrene copolymers (SEBS), and styrene-isobutylene-styrene copolymers (SIBS). Further, examples of the copolymer include random copolymers and block copolymers (hereinafter, the same applies). These may be used alone or in combination of two or more.

From the viewpoint of the affinity for the thermosetting resin, as the styrene-based elastomer (A), preferably, a styrene-ethylene-propylene copolymer (SEP), a styrene-ethylene-propylene-styrene copolymer (SEPS), a styrene-butadiene-styrene copolymer (SBS), and a styrene-ethylene-butylene-styrene copolymer (SEBS) are used.

From the viewpoint of heat resistance, the low dielectric property, and the affinity for the thermosetting resin, as the styrene-based elastomer (A), more preferably, a styrene-ethylene-propylene-styrene copolymer (SEPS) and a styrene-ethylene-butylene-styrene copolymer (SEBS) are used.

From the viewpoint of the heat resistance, the low dielectric property, and the affinity for the thermosetting resin, as the styrene-based elastomer (A), further more preferably, a styrene-based elastomer (A) without containing the structural unit derived from the butylene is used, more specifically, a styrene-ethylene-propylene-styrene copolymer (SEPS) is used.

In addition, from the viewpoint of the heat resistance, the low dielectric property, and the affinity for the thermosetting resin, as the styrene-based elastomer (A), further more preferably, a styrene-based elastomer (A) containing the structural unit derived from the butylene and containing a relatively large amount of structural units derived from the styrene is also used. In such a case, as described above, the content ratio of the structural unit derived from the butylene is preferably 20% by mass or more, particularly preferably 25% by mass or more with respect to the total amount of the styrene-based elastomer (A).

In other words, as the styrene-based elastomer (A), further more preferably, a styrene-based elastomer (A) without containing the structural unit derived from the butylene, and a styrene-based elastomer (A) containing the structural unit derived from the butylene and containing the structural unit derived from the styrene at a ratio of 25% by mass or more are used.

In addition, from the viewpoint of the heat resistance, the low dielectric property, and the affinity for the thermosetting resin, particularly preferably, a styrene-based elastomer (A) without containing the structural unit derived from the butylene is used, more specifically, a styrene-ethylene-propylene-styrene copolymer (SEPS) is used.

A weight average molecular weight of the styrene-based elastomer (A) is, from the viewpoint of the low dielectric property, for example, 10000 or more, preferably 30000 or more, more preferably 50000 or more, further more preferably 70000 or more, particularly preferably 90000 or more. In addition, the weight average molecular weight of the styrene-based elastomer (A) is, from the viewpoint of the low dielectric property and stability of a diluent (varnish) to be described later, for example, 0.5 million or less, preferably 0.3 million or less, more preferably 0.2 million or less, further more preferably 0.11 million or less, particularly preferably 0.1 million or less.

The weight average molecular weight of the styrene-based elastomer (A) is measured as a molecular weight in terms of standard polystyrene by gel permeation chromatography.

These styrene-based elastomers (A) are used alone or in combination of two or more. Further, as the styrene-based elastomer (A), a commercially available product may be used.

Examples of the commercially available product of the styrene-based elastomer (A) include trade name: the SEPTON series (manufactured by KURARAY CO., LTD.), trade name: the Kraton series (manufactured by Kraton Polymer Japan Corporation), and trade name: the Tuftec series (manufactured by ASAHI KASEI CORPORATION).

### (2) Cyclic Olefin-Based Polymer

Examples of the cyclic olefin-based polymer (B) having the alicyclic ring in the main chain include a polymer of a cyclic olefin and a hydride thereof.

An example of the cyclic olefin includes a cyclic hydrocarbon compound containing an ethylenically unsaturated bond. An example of the cyclic hydrocarbon compound includes a cyclic hydrocarbon compound having 6 to 30 carbon atoms. More specifically, examples of the cyclic olefin include bicyclo[2.2.1]-hepta-2-ene (also known as norbornene) and a derivative thereof, tricyclo[4.3.0.1^{2.5}]-3-decene and a derivative thereof, tricyclo[4.4.0.1^{2.5}]-3-decene and a derivative thereof, tetracyclo[4.4.0.1^{2,5}.1^{7,10}]-3-dodecene and a derivative thereof, pentacyclo[6.5.1.1^{3 6}.0^{2 7}.0^{9 13}]-4-pentadecene and a derivative thereof, hexacyclo[6.6.1.1^{3.6}.1^{10.13}.0^{2.7}.0^{9.14}]-4-heptadecene and a derivative thereof, and heptacyclo[8.7.0.1^{2.9}.1^{4.7}.1^{11.17}.0^{3.8}.0^{12.16}]-5-eicosene and a derivative thereof. These may be used alone or in combination of two or more. Preferably, a bicyclo[2.2.1]-hepta-2-ene (also known as norbornene) is used.

A polymer of the cyclic olefin is produced by a known method. For example, the cyclic olefin is subjected to ring-opening metathesis polymerization by a known method. Thus, a ring-opening metathesis polymer of the cyclic olefin is obtained. The polymerization conditions are appropriately set in accordance with its purpose and use.

Further, if necessary, the ring-opening metathesis polymer of the cyclic olefin can be hydrogenated by a known method. Thus, a hydride of the ring-opening metathesis polymer of the cyclic olefin is obtained.

These polymers of the cyclic olefin and the hydrides of these may be used alone or in combination of two or more.

Examples of the cyclic olefin-based polymer (B) having the alicyclic ring in the main chain include a copolymer of the cyclic olefin and the chain olefin (cyclic olefin copolymer), and a hydride thereof.

Examples of the cyclic olefin include the above-described cyclic hydrocarbon compounds, and preferably, tetracyclo[4.4.0.1^{2,5}.1^{7,10}]-3-dodecene and a derivative thereof are used, more preferably, tetracyclo[4.4.0.1^{2,5} 1^{7,10}]-3-dodecene is used.

An example of the chain olefin includes the above-described chain olefin having 2 to 8 carbon atoms, and preferably, ethylene is used.

A copolymer of the chain olefin and the cyclic olefin is produced by a known method. For example, the chain olefin and the cyclic olefin are polymerized in the presence of a known catalyst (for example, a vanadium-based catalyst, an aluminum-based catalyst, and a metallocene catalyst). Thus, the copolymer of the chain olefin and the cyclic olefin is obtained. The polymerization conditions are appropriately set in accordance with its purpose and use.

Further, if necessary, the copolymer of the chain olefin and the cyclic olefin can be hydrogenated by a known method. Thus, a hydride of the copolymer of the chain olefin and the cyclic olefin is obtained.

These copolymers of the chain olefin and the cyclic olefin, and the hydrides of these may be used alone or in combination of two or more.

As the cyclic olefin-based polymer (B), preferably, a copolymer of a chain olefin and a cyclic olefin is used. In other words, the cyclic olefin-based polymer (B) preferably contains the structural unit derived from the chain olefin and the structural unit derived from the cyclic olefin. More preferably, the cyclic olefin-based polymer (B) consists of the structural unit derived from the chain olefin and the structural unit derived from the cyclic olefin.

The content ratio of the structural unit derived from the chain olefin and the content ratio of the structural unit derived from the cyclic olefin are appropriately set in accordance with its purpose and use. For example, in order to adjust the weight average molecular weight and a glass transition temperature of the cyclic olefin-based polymer (B), the content ratio of the structural unit derived from the chain olefin and the content ratio of the structural unit derived from the cyclic olefin are appropriately set.

The weight average molecular weight of the cyclic olefin-based polymer (B) is, from the viewpoint of the heat resistance, for example, 10000 or more, preferably 50000 or more, more preferably 80000 or more, further more preferably 0.1 million or more, particularly preferably 0.112 million or more. Further, the weight average molecular weight of the cyclic olefin-based polymer (B) is, for example, 0.5 million or less, preferably 0.3 million or less, more preferably 0.2 million or less, further more preferably 0.15 million or less, particularly preferably 0.118 million or less.

The weight average molecular weight of the cyclic olefin-based polymer (B) is measured as the molecular weight in terms of the standard polystyrene by the gel permeation chromatography.

From the viewpoint of the heat resistance, the glass transition temperature of the cyclic olefin-based polymer (B) is, for example, 60°C or more, preferably 70°C or more, more preferably 80°C or more, further more preferably 90°C or more, particularly preferably 100°C or more. In addition, from the viewpoint of the stability of the diluent (varnish) to be described later and the affinity (compatibility) for the thermosetting resin, the glass transition temperature of the cyclic olefin-based polymer (B) is, for example, 200°C or less, preferably 175°C or less, more preferably 150°C or less, further more preferably 140°C or less, further more preferably 130°C or less, further more preferably 120°C or less, particularly preferably 110°C or less.

The glass transition temperature of the cyclic olefin-based polymer (B) is measured in conformity with JIS K 7122 (2012).

These cyclic olefin-based polymers (B) may be used alone or in combination of two or more. Further, as the cyclic olefin-based polymer (B), a commercially available product can be also used.

Examples of the commercially available product of the cyclic olefin-based polymer (B) include trade name: the ZEONEX series (hydride of the cyclic monomer polymer, manufactured by Zeon Corporation), trade name: the ZEONOR series (hydride of the cyclic monomer polymer, manufactured by Zeon Corporation), and trade name: the APEL series (copolymer of the chain olefin and the cyclic olefin, manufactured by Mitsui Chemicals Inc.).

### (3) Mixing Ratio

A polyolefin-based resin is obtained by mixing the above-described styrene-based elastomer (A) and the above-described cyclic olefin-based polymer (B) by a known method. Preferably, the polyolefin-based resin is obtained by melting and kneading the styrene-based elastomer (A) and the above-described cyclic olefin-based polymer (B) in a twin screw extruder.

Then, in the polyolefin-based resin, a mixing ratio of the styrene-based elastomer (A) and the cyclic olefin-based polymer (B) is adjusted to a specific range.

More specifically, from the viewpoint of the affinity for the thermosetting resin, the content ratio of the styrene-based elastomer (A) is 30 parts by mass or more, preferably 35 parts by mass or more, more preferably 40 parts by mass or more, further more preferably 45 parts by mass or more with respect to 100 parts by mass of the total amount of the styrene-based elastomer (A) and the cyclic olefin-based polymer (B). In addition, from the viewpoint of the heat resistance, the content ratio of the styrene-based elastomer (A) is 89 parts by mass or less, preferably 85 parts by mass or less, more preferably 80 parts by mass or less, further more preferably 70 parts by mass or less, particularly preferably 60 parts by mass or less with respect to 100 parts by mass of the total amount of the styrene-based elastomer (A) and the cyclic olefin-based polymer (B).

In other words, from the viewpoint of the heat resistance, the content ratio of the cyclic olefin-based polymer (B) is 11 parts by mass or more, preferably 15 parts by mass or more, more preferably 20 parts by mass or more, further more preferably 30 parts by mass or more, particularly preferably 40 parts by mass or more with respect to 100 parts by mass of the total amount of the styrene-based elastomer (A) and the cyclic olefin-based polymer (B). In addition, from the viewpoint of the affinity for the thermosetting resin, the content ratio of the cyclic olefin-based polymer (B) is 70 parts by mass or less, preferably 65 parts by mass or less, more preferably 60 parts by mass or less, further more preferably 55 parts by mass or less with respect to 100 parts by mass of the total amount of the styrene-based elastomer (A) and the cyclic olefin-based polymer (B).

As long as the polyolefin-based resin includes the styrene-based elastomer (A) and the cyclic olefin-based polymer (B) having the alicyclic ring in the main chain at the above-described specific ratio, the low dielectric resin composition has excellent adhesiveness and the excellent low dielectric property, further has the excellent heat resistance, and in addition, has the excellent affinity (compatibility and adhesion) for the thermosetting resin.

In addition, the content ratio of the cyclic olefin-based polymer (B) is, for example, 12 parts by mass or more, preferably 25 parts by mass or more, more preferably 50 parts by mass or more with respect to 100 parts by mass of the styrene-based elastomer (A). In addition, the content ratio of the cyclic olefin-based polymer (B) is, for example, 235 parts by mass or less, preferably 185 parts by mass or less, more preferably 150 parts by mass or less with respect to 100 parts by mass of the styrene-based elastomer (A).

When the ratio of the styrene-based elastomer (A) to the cyclic olefin-based polymer (B) is within the above-described range, the low dielectric resin composition has the excellent adhesiveness and the excellent low dielectric property, further has the excellent heat resistance, and in addition, has the excellent affinity (compatibility and adhesion) for the thermosetting resin.

### (4) Another Olefin-Based Polymer

The polyolefin-based resin may, if necessary, include another olefin-based polymer (C). The other olefin-based polymer (C) is a known olefin polymer except for the styrene-based elastomer (A) and the cyclic olefin-based polymer (B).

Examples of the other olefin-based polymer (C) include polyethylene, polypropylene, polyisobutylene, poly1-butene, poly4-methylpentene, ethylene-propylene copolymers, propylene-butene copolymers, ethylene-butene copolymers, ethylene-4-methyl-1-pentene copolymers, propylene-4-methyl-1-pentene copolymers, butylene-4-methyl-1-pentene copolymers, ethylene-hexene copolymers, and ethylene-vinyl acetate copolymers. These may be used alone or in combination of two or more. In addition, the content ratio of the other olefin-based polymer is appropriately set within a range as long as it does not inhibit the excellent effect of the present invention.

The content ratio of the other olefin-based polymer (C) is, for example, 30% by mass or less, preferably 20% by mass or less, more preferably 10% by mass or less, particularly preferably 0% by mass with respect to the total amount of the polyolefin-based resin. That is, the polyolefin-based resin preferably does not contain the other olefin-based polymer (C). In other words, the polyolefin-based resin preferably consists of the styrene-based elastomer (A) and the cyclic olefin-based polymer (B).

### (5) Modified Polyolefin-Based Resin

The polyolefin-based resin may be a non-modified polyolefin-based resin or a modified polyolefin-based resin.

The non-modified polyolefin-based resin is a polyolefin-based resin including the styrene-based elastomer (A) and the cyclic olefin-based polymer (B), and not modified by a modifier (described later). The modified polyolefin-based resin is a polyolefin-based resin including the styrene-based elastomer (A) and the cyclic olefin-based polymer (B), and modified by the modifier (described later). From the viewpoint of the adhesion to a metal (for example, a conductive layer to be described later), as the polyolefin-based resin, preferably, a modified polyolefin-based resin is used.

The modified polyolefin-based resin is obtained, for example, by modifying the polyolefin-based resin by a known modifier.

Examples of the modifier include functional group-containing monomers. Examples of the functional group-containing monomer include carboxy group-containing monomers, sulfonyl group-containing monomers, amino group-containing monomers, hydric group-containing monomers, glycidyl group-containing monomers, and halogen-containing monomers. These may be used alone or in combination of two or more. From the viewpoint of the adhesion to the metal (for example, the conductive layer to be described later), as the functional group-containing monomer, preferably, a carboxy group-containing monomer is used.

Examples of the carboxy group-containing monomer include unsaturated acids. Examples of the unsaturated acid include maleic acid, fumaric acid, itaconic acid, and (meth)acrylic acid. Further, examples of the unsaturated acid include anhydrides of these. These may be used alone or in combination of two or more. As the carboxy group-containing monomer, preferably, a maleic acid and an anhydride thereof are used, more preferably, a maleic anhydride is used.

In other words, examples of the modified polyolefin-based resin include acid-modified polyolefin-based resins. Examples of the acid-modified polyolefin-based resin include maleic (anhydride)-modified polyolefin-based resins, fumaric (anhydride)-modified polyolefin-based resins, itaconic (anhydride)-modified polyolefin-based resins, and (meth)acrylic acid-modified polyolefin-based resins. These may be used alone or in combination of two or more. As the modified polyolefin-based resin, preferably, a maleic anhydride-modified polyolefin-based resin is used.

A method for obtaining the modified polyolefin-based resin is not particularly limited. For example, the non-modified polyolefin-based resin and the modifier are reacted by a known method. For example, the modifier is added at the time of mixing of the styrene-based elastomer (A) and the cyclic olefin-based polymer (B). Further, for example, the modifier is added to the styrene-based elastomer (A) and/or the cyclic olefin-based polymer (B) before the above-described mixing, and the styrene-based elastomer (A) and/or the cyclic olefin-based polymer (B) are/is reacted with the modifier. Preferably, the modifier is added at the time of mixing of the styrene-based elastomer (A) and the cyclic olefin-based polymer (B).

An addition amount of the modifier is appropriately set in accordance with its purpose and use. For example, when the carboxy group-containing monomer is used as the modifier, the ratio of the carboxy group-containing monomer is, for example, 0.1 parts by mass or more, preferably 0.5 parts by mass or more with respect to 100 parts by mass of the total amount of the styrene-based elastomer (A) and the cyclic olefin-based polymer (B). In addition, the ratio of the carboxy group-containing monomer is, for example, 20 parts by mass or less, preferably 10 parts by mass or less, more preferably 5 parts by mass or less with respect to 100 parts by mass of the total amount of the styrene-based elastomer (A) and the cyclic olefin-based polymer (B).

In addition, when the carboxy group-containing monomer is used as the modifier, if necessary, a modified initiator is mixed. Examples of the modified initiator include known graft catalysts, and more specifically, examples thereof include known peroxides and known azo compounds. The mixing ratio of the modified initiator is appropriately set in accordance with its purpose and use.

Then, the styrene-based elastomer (A), the cyclic olefin-based polymer (B), and the modifier are mixed to be reacted, thereby obtaining the modified polyolefin-based resin. Reaction conditions are not particularly limited, and are appropriately set in accordance with a kind and amount of the modifier.

Such a modified polyolefin-based resin includes the styrene-based elastomer (A) modified with the modifier (modified styrene-based elastomer) and the cyclic olefin-based polymer (B) modified with the modifier (modified cyclic olefin-based polymer). According to the modified polyolefin-based resin, it is possible to improve the adhesion to the metal (for example, the conductive layer to be described later).

When the carboxy group-containing monomer is used as the modifier, an acid value of the modified polyolefin-based resin is, for example, 0.1 mgKOH/g or more, preferably 0.5 mgKOH/g or more. Further, the acid value of the modified polyolefin-based resin is, for example, 100 mgKOH/g or less, preferably 60 mgKOH/g or less. The acid value is measured in conformity with JIS K 2501 (2003).

### (6) Non-Polyolefin-Based Resin

In the low dielectric resin composition, the resin component may also contain a non-polyolefin-based resin in addition to the above-described polyolefin-based resin. The non-polyolefin-based resin is a known resin except for the polyolefin-based resin. Examples of the non-polyolefin-based resin include (meth)acrylate-based resins. These may be used alone or in combination of two or more.

From the viewpoint of the affinity for the thermosetting resin, in the low dielectric resin composition, the resin component preferably does not contain the non-polyolefin-based resin. In other words, in the low dielectric resin composition, the resin component preferably consists of the above-described polyolefin-based resin.

### (7) Organic Solvent

The low dielectric resin composition may be also diluted with an organic solvent. More specifically, the low dielectric resin composition may be also dissolved and/or dispersed in the organic solvent. In other words, a diluent (solution and/or dispersion liquid) of the low dielectric resin composition may be also prepared.

Solid content concentration of the diluent (solution and/or dispersion liquid) of the low dielectric resin composition is, for example, 5% by mass or more, preferably 10% by mass or more. Further, the solid content concentration of the diluent (solution and/or dispersion liquid) of the low dielectric resin composition is, for example, 50% by mass or less, preferably 30% by mass or less.

### (8) Additive

The low dielectric resin composition and/or the diluent thereof may contain a known additive. Examples of the additive include plasticizers, defoaming agents, leveling agents, antifungal agents, rust inhibitors, matting agents, flame retardants, thixotropic agents, tackifiers, thickeners, lubricants, antistatic agents, surfactants, reaction retardants, antioxidants, ultraviolet absorbers, hydrolysis inhibitors, weathering stabilizers, heat-resistant stabilizers, dye, inorganic pigments, organic pigments, curing agents, cross-linking agents, thermal initiators (thermal radical polymerization initiators), silane coupling agents, anti-tack agents, inorganic particles, and organic particles. These may be used alone or in combination of two or more. The addition ratio and the addition timing of the additive are appropriately set in accordance with its purpose and use.

### (9) Function and Effect

The above-described low dielectric resin composition contains the polyolefin-based resin as the resin component. Then, the polyolefin-based resin includes the styrene-based elastomer (A) and the cyclic olefin-based polymer (B) having the alicyclic ring in the main chain at a specific ratio. Therefore, the low dielectric resin composition has the excellent adhesiveness and the excellent low dielectric property, further has the excellent heat resistance, and in addition, has the excellent affinity (compatibility and adhesion) for the thermosetting resin.

A relative dielectric constant (measurement conditions: 10 GHz) of the low dielectric resin composition (solid content) is, for example, 1.5 or more, preferably 1.9 or more. Further, the relative dielectric constant (measurement conditions: 10 GHz) of the low dielectric resin composition (solid content) is, for example, 3.0 or less, preferably 2.5 or less. The relative dielectric constant is measured in conformity with Examples to be described later (hereinafter, the same applies).

A dielectric loss tangent (measurement conditions: 10 GHz) of the low dielectric adhesive composition (solid content) is, for example, 0.0001 or more, preferably 0.0003 or more. In addition, the dielectric loss tangent (measurement conditions: 10 GHz) of the low dielectric adhesive composition (solid content) is, for example, 0.004 or less, preferably 0.002 or less. The relative dielectric constant is measured in conformity with Examples to be described later.

Such a low dielectric resin composition is preferably used as an adhesiveness-imparting agent and/or a low dielectric adhesive in the production of a laminate.

### 2. Laminate

A laminate is a circuit board or a circuit board material. The circuit board is, for example, a laminate including the conductive layer having a circuit pattern (circuit layer). The circuit board material is a laminate which can be processed into the circuit board. More specifically, the circuit board material is a laminate including, for example, a conductive layer without having a circuit pattern (non-circuit layer), and being capable of forming a circuit pattern by processing. Examples of the circuit board material include copper-clad laminate boards.

The laminate is produced by using the low dielectric resin composition. In the following, a method for producing the circuit board or the circuit board material as the laminate using the low dielectric resin composition is described in detail.

### (1) First Embodiment

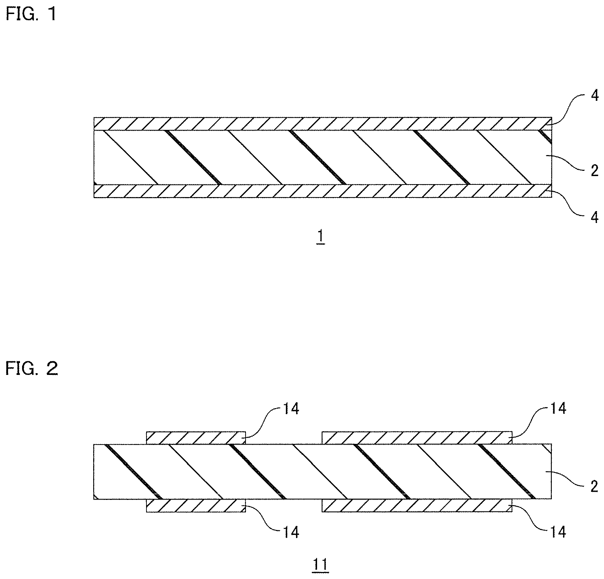

FIG. 1 shows a schematic cross-sectional view showing a copper-clad laminate board as a first embodiment of the laminate. In the first embodiment, the above-described low dielectric resin composition is used as the adhesiveness-imparting agent.

More specifically, in FIG. 1, a copper-clad laminate board 1 includes an insulating layer having the adhesiveness (hereinafter, an adhesive insulating layer) 2 and a conductive layer 4 disposed on at least one surface of the adhesive insulating layer 2.

The adhesive insulating layer 2 contains a resin molded product having the low dielectric property and the adhesiveness (hereinafter, low dielectric adhesive molded product). The adhesive insulating layer 2 is preferably made of a low dielectric adhesive molded product, or an impregnated substrate and a low dielectric adhesive molded product.

The low dielectric adhesive molded product is, for example, a molded cured product of the following low dielectric adhesive composition (molding material).

The low dielectric adhesive composition (molding material) contains, for example, the thermosetting resin (uncured thermosetting resin) and the adhesiveness-imparting agent (additive).

Examples of the thermosetting resin include epoxy resins, polyphenylene ether resins, fluorine resins, polyimide resins, phenol resins, melamine resins, polyolefin resins having an unsaturated double bond, and liquid crystal polymers. These may be used alone or in combination of two or more. As the thermosetting resin, preferably, a polyphenylene ether resin is used.

In other words, the thermosetting resin includes at least one kind selected from the group consisting of epoxy resins, polyphenylene ether resins, fluorine resins, polyimide resins, phenol resins, melamine resins, polyolefin resins having an unsaturated double bond, and liquid crystal polymers. The thermosetting resin preferably includes a polyphenylene ether resin. The thermosetting resin preferably consists of a polyphenylene ether resin.

The adhesiveness-imparting agent (additive) includes the above-described low dielectric resin composition, and preferably consists of the above-described low dielectric resin composition.

The low dielectric adhesive composition (molding material) is prepared, for example, by mixing the thermosetting resin and the adhesiveness-imparting agent by a known method.

The mixing ratio of the thermosetting resin and the adhesiveness-imparting agent is not particularly limited, and the ratio of the adhesiveness-imparting agent is, for example, 1 part by mass or more, preferably 5 parts by mass or more with respect to 100 parts by mass of the thermosetting resin. Further, the ratio of the adhesiveness-imparting agent is, for example, 400 parts by mass or less, preferably 150 parts by mass or less with respect to 100 parts by mass of the thermosetting resin.

The ratio of the thermosetting resin is, for example, 20% by mass or more, preferably 40% by mass or more with respect to the total amount of the thermosetting resin and the adhesiveness-imparting agent. In addition, the ratio of the thermosetting resin is, for example, 99% by mass or less, preferably 95% by mass or less with respect to the total amount of the thermosetting resin and the adhesiveness-imparting agent.

In addition, the ratio of the adhesiveness-imparting agent is, for example, 1% by mass or more, preferably 5% by mass or more with respect to the total amount of the thermosetting resin and the adhesiveness-imparting agent. In addition, the ratio of the adhesiveness-imparting agent is, for example, 80% by mass or less, preferably 60% by mass or less with respect to the total amount of the thermosetting resin and the adhesiveness-imparting agent.

In addition, the low dielectric adhesive composition (molding material) may also include the additive in addition to the thermosetting resin and the adhesiveness-imparting agent. Examples of the additive include plasticizers, defoaming agents, leveling agents, antifungal agents, rust inhibitors, matting agents, flame retardants, thixotropic agents, tackifiers, thickeners, lubricants, antistatic agents, surfactants, reaction retardants, antioxidants, ultraviolet absorbers, hydrolysis inhibitors, weathering stabilizers, heat-resistant stabilizers, dye, inorganic pigments, organic pigments, curing agents, cross-linking agents, thermal initiators (thermal radical polymerization initiators), silane coupling agents, anti-tack agents, inorganic particles, and organic particles. These may be used alone or in combination of two or more. The addition ratio and the addition timing of the additive are appropriately set in accordance with its purpose and use.

The low dielectric adhesive composition (molding material) preferably contains the thermal initiator from the viewpoint of a thermosetting property. Examples of the thermal initiator include organic peroxides. Examples of the organic peroxide include dicumyl peroxide, 1-(2-t-(butylperoxyisopropyl)-1-isopropylbenzene, 1-(2-t-butylperoxyisopropyl)-3-isopropylbenzene, 1,3-bis(t-butylperoxy-isopropyl)benzene, 2,5-dimethyl-2.5-bis(t-butylperoxy)hexane, and 2,5-dimethyl-2,5-(tert-butylperoxy)-hexyne-3. These may be used alone or in combination of two or more.

The addition amount of the thermal initiator is, for example, 0.1 parts by mass or more, preferably 1.0 part by mass or more with respect to 100 parts by mass of the total amount of the resin component of the adhesiveness-imparting agent (low dielectric resin composition). Further, the addition amount of the thermal initiator is, for example, 10 parts by mass or less, preferably 5 parts by mass or less with respect to 100 parts by mass of the total amount of the resin component of the adhesiveness-imparting agent (low dielectric resin composition).

For example, when the adhesive insulating layer 2 is made of the low dielectric adhesive molded product, the adhesive insulating layer 2 is formed by molding and curing the low dielectric adhesive composition (molding material) by a known method.

For example, the low dielectric adhesive composition (molding material) is applied to a known substrate (for example, a copper board and a release liner) to be dried if necessary. Thus, a coating film of the low dielectric adhesive composition (molding material) is obtained. Then, the coating film is cured by heating (thermally cured).

Thus, the low dielectric adhesive molded product (the adhesive insulating layer 2) made of the cured product of the low dielectric adhesive composition (molding material) is obtained.

Also, for example, when the adhesive insulating layer 2 is made of the impregnated substrate and the low dielectric adhesive molded product, the adhesive insulating layer 2 is formed by impregnating the impregnated substrate with the low dielectric adhesive composition (molding material) to be dried and cured.

For example, as the impregnated substrate, glass cloth is impregnated with the low dielectric adhesive composition (molding material) to be dried if necessary. Then, the glass cloth and the low dielectric adhesive composition (molding material) impregnated into the glass cloth are cured by heating (thermally cured).

Thus, the low dielectric adhesive molded product (the adhesive insulating layer 2) including the glass cloth and the cured product of the low dielectric adhesive composition (molding material) is obtained.

A shape and size of the low dielectric adhesive molded product (the adhesive insulating layer 2) is appropriately set in accordance with its purpose and use.

The conductive layer 4 is a thin film made of a known electrically conductive material. An example of the electrically conductive material includes copper. The conductive layer 4 is formed by a known film-forming method. A thickness of the conductive layer 4 is, for example, adjusted relatively thin. Thus, a circuit pattern can be formed by a subtractive method. The thickness of the conductive layer 4 is, for example, 50 µm or less.

The conductive layer 4 is disposed on at least one surface of the adhesive insulating layer 2. The conductive layer 4 is preferably disposed on both surfaces of the adhesive insulating layer 2. In FIG. 1, the conductive layer 4 is disposed on both surfaces of the adhesive insulating layer 2.

More specifically, the conductive layer 4 is formed so as to be in contact with the surface of the adhesive insulating layer 2 by a known method. Thus, the conductive layer 4 is bonded to the adhesive insulating layer 2. As a result, the copper-clad laminate board 1 including the adhesive insulating layer 2 and the conductive layer 4 is obtained.

The method for obtaining the copper-clad laminate board 1 is not limited to the description above. For example, first, the conductive layer 4 made of a metal foil is prepared. Next, the low dielectric adhesive composition (molding material) is applied to the conductive layer 4 to be dried if necessary. Thereafter, the low dielectric adhesive composition (molding material) is thermally cured. Thus, the adhesive insulating layer 2 can be formed on the surface of the conductive layer 4. As a result, the copper-clad laminate board 1 including the adhesive insulating layer 2 and the conductive layer 4 which is in contact with the surface of the adhesive insulating layer 2 is obtained.

The above-described copper-clad laminate board 1 has the insulating layer 2. The insulating layer 2 includes the above-described low dielectric adhesive molded product. Therefore, in the copper-clad laminate board 1, the insulating layer 2 has the excellent adhesiveness and the excellent low dielectric property, further has the excellent heat resistance, and in addition, has the excellent affinity (compatibility and adhesion) for the thermosetting resin, and therefore, has excellent strength.

In addition, the adhesiveness-imparting agent (additive), the low dielectric adhesive composition (molding material), and the low dielectric adhesive molded product (the adhesive insulating layer 2) described above include the above-described low dielectric resin composition. Therefore, the adhesiveness-imparting agent (additive), the low dielectric adhesive composition (molding material), and the low dielectric adhesive molded product (the adhesive insulating layer 2) have the excellent adhesiveness and the excellent low dielectric property, further have the excellent heat resistance, and in addition, have the excellent affinity (compatibility) for the thermosetting resin, and therefore, have the excellent strength.

### (2) Second Embodiment

FIG. 2 shows a schematic cross-sectional view showing a circuit board as a second embodiment of a laminate. In the second embodiment, the above-described low dielectric resin composition is used as the adhesiveness-imparting agent in the same manner as the first embodiment.

More specifically, the copper-clad laminate board 1 of the above-described first embodiment is processed, so that a circuit board 11 can be formed. That is, the conductive layer 4 of the copper-clad laminate board 1 is etched by a known method, so that a circuit 14 can be formed. As a result, as shown in FIG. 2, the circuit board 11 as the second embodiment of the laminate is formed.

In such a circuit board 11, the adhesive insulating layer 2 contains the low dielectric adhesive molded product. Therefore, in the circuit board 11, the adhesive insulating layer 2 has the excellent adhesiveness and the excellent low dielectric property, further has the excellent heat resistance, and in addition, has the excellent affinity (compatibility and adhesion) for the thermosetting resin, and therefore, has the excellent strength.

### (3) Third Embodiment

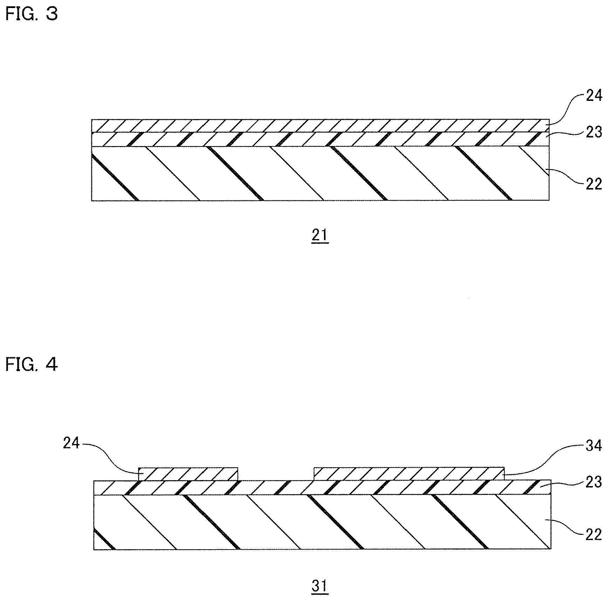

FIG. 3 shows a schematic cross-sectional view showing a copper-clad laminate board as a third embodiment of a laminate. In the third embodiment, the above-described low dielectric resin composition is used as the low dielectric adhesive.

In FIG. 3, a copper-clad laminate board 21 includes an insulating layer 22, a conductive layer 24 disposed facing the insulating layer 22, and an adhesive layer 23 disposed between the insulating layer 22 and the conductive layer 24 and bonding the insulating layer 22 to the conductive layer 24. In addition, in the copper-clad laminate board 21, the adhesive layer 23 is formed of the above-described low dielectric adhesive.

The insulating layer 22 is, for example, an insulating layer which does not have the adhesiveness (non-adhesive insulating layer). The insulating layer 22 includes, for example, the above-described thermosetting resin. The insulating layer 22 preferably consists of the above-described thermosetting resin.

The conductive layer 24 is a thin film made of the known electrically conductive material in the same manner as the above-described conductive layer 4. An example of the electrically conductive material includes copper. The conductive layer 24 is formed by the known film-forming method. The thickness of the conductive layer 24 is, for example, adjusted relatively thin. Thus, the circuit pattern can be formed by the subtractive method. The thickness of the conductive layer 24 is, for example, 50 µm or less.

The adhesive layer 23 is interposed between the insulating layer 22 and the conductive layer 24. The adhesive layer 23 is a dried material of the low dielectric adhesive. The low dielectric adhesive includes, for example, the above-described low dielectric resin composition. The low dielectric adhesive is preferably a diluent of the above-described low dielectric resin composition.

When the copper-clad laminate board 21 is produced, for example, first, the insulating layer 22 and the conductive layer 24 are prepared. Next, the low dielectric adhesive is applied to one surface of the insulating layer 22. Thereafter, the conductive layer 24 is bonded to one surface of the low dielectric adhesive, thereby drying the low dielectric adhesive. Thus, the copper-clad laminate board 21 is obtained. It is also possible to produce the copper-clad laminate board 21 in a reverse order of the description above. In other words, in this method, the low dielectric adhesive is applied to one surface of the conductive layer 24. Thereafter, the insulating layer 22 is bonded to one surface of the low dielectric adhesive, thereby drying the low dielectric adhesive. Thus, the copper-clad laminate board 21 is obtained.

In the above-described copper-clad laminate board 21, the insulating layer 22 is bonded to the conductive layer 24 by the adhesive layer 23 (low dielectric adhesive). That is, the copper-clad laminate board 21 has the adhesive layer 23. Then, the adhesive layer 23 (low dielectric adhesive) includes the above-described low dielectric resin composition. Therefore, in the copper-clad laminate board 21, the adhesive layer 23 (low dielectric adhesive) has the excellent adhesiveness and the excellent low dielectric property, further has the excellent heat resistance, and in addition, has the excellent affinity (adhesion) for the thermosetting resin.

In the above-described copper-clad laminate board 21 of the third embodiment, the adhesive layer 23 and the conductive layer 24 are formed on only one surface of the insulating layer 22. Alternatively, the adhesive layer 23 and the conductive layer 24 may be also formed on both surfaces of the insulating layer 22. Further, in such a case, the copper-clad laminate board 21 may also not have the insulating layer 22. That is, the conductive layer 24 may be also formed on both surfaces of the adhesive layer 23. In other words, the two conductive layers 24 may be bonded to each other by the adhesive layer 23. In such a case, the adhesive layer 23 is also used as the insulating layer 22.

### (4) Fourth Embodiment

FIG. 4 shows a schematic cross-sectional view showing a circuit board as a fourth embodiment of a laminate. In the fourth embodiment, the above-described low dielectric resin composition is used as the low dielectric adhesive in the same manner as the third embodiment.

More specifically, the copper-clad laminate board 21 of the third embodiment described above is processed, so that a circuit board 31 can be formed. More specifically, the conductive layer 24 of the copper-clad laminate board 21 is etched by a known method, so that a circuit 34 can be formed. As a result, as shown in FIG. 4, the circuit board 31 as the fourth embodiment of the laminate is formed.

In such a circuit board, the insulating layer 22 is bonded to the circuit 34 made of the conductive layer by the adhesive layer 23.

In such a circuit board 31, the insulating layer 22 is bonded to the circuit 34 made of the conductive layer by the adhesive layer 23 (low dielectric adhesive). The adhesive layer 23 (low dielectric adhesive) contains the above-described low dielectric resin composition. Therefore, in the circuit board 31, the adhesive layer 23 (low dielectric adhesive) has the excellent adhesiveness and the excellent low dielectric property, further has the excellent heat resistance, and in addition, has the excellent affinity (adhesion) for the thermosetting resin.

In the circuit board 31 of the fourth embodiment described above, the adhesive layer 23 and the circuit 34 are formed on only one surface of the insulating layer 22. Alternatively, the adhesive layer 23 and the circuit 34 may be also formed on both surfaces of the insulating layer 22. In such a case, the circuit board 31 may also not have the insulating layer 22. In other words, the circuit 34 may be also formed on both surfaces of the adhesive layer 23. In other words, the two circuits 34 may be bonded to each other by the adhesive layer 23. In such a case, the adhesive layer 23 is also used as the insulating layer 22.

### (5) Fifth Embodiment

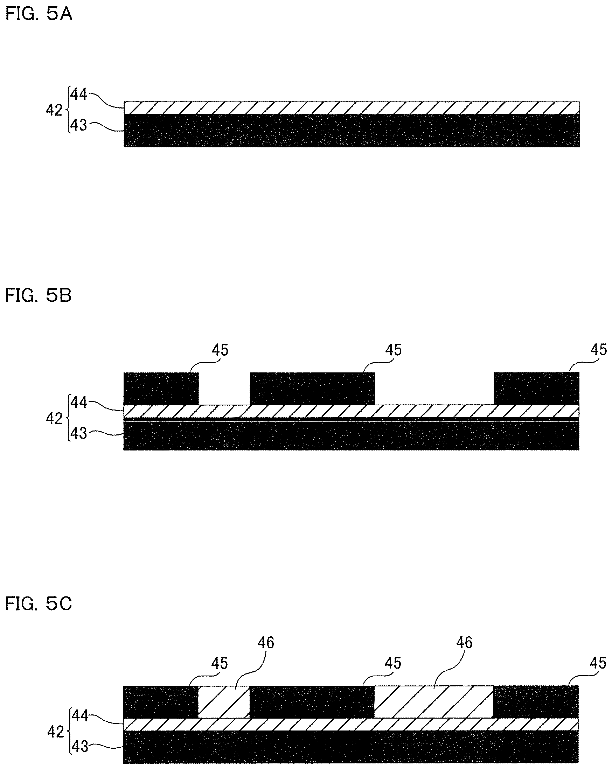

FIGS. 5 to 8 show process cross-sectional views for producing a circuit board as a fifth embodiment of a laminate. In the fifth embodiment, the above-described low dielectric resin composition is used as the low dielectric adhesive.

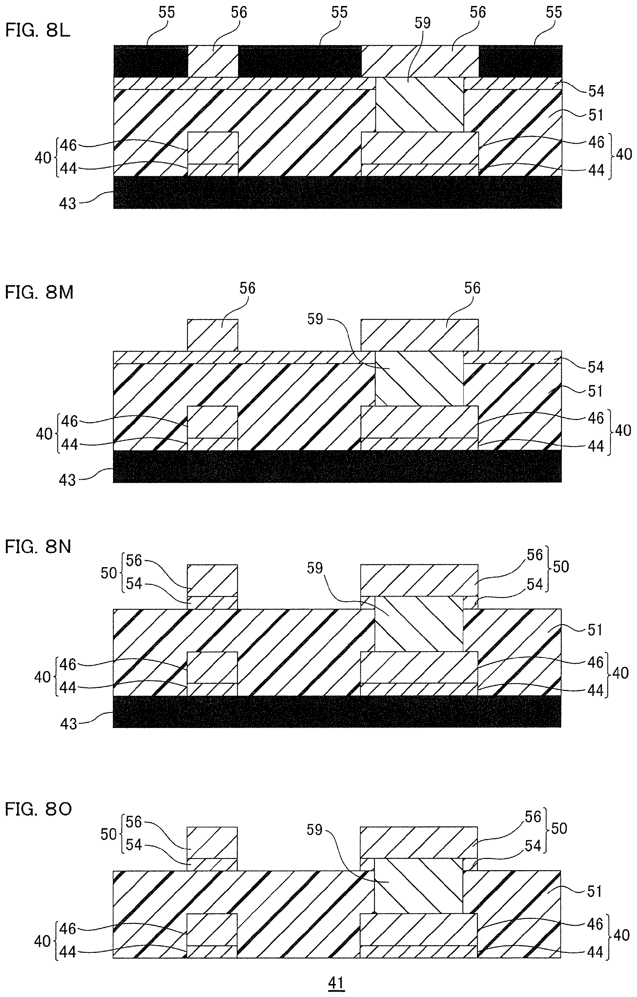

In FIGS. 5 to 8, a circuit board 41 is a multi-layer circuit board having at least two layers of conductive layers. More specifically, as referred to FIG. 8O, the circuit board 41 includes a first conductive layer 40, a second conductive layer 50 disposed facing the first conductive layer 40, and an adhesive layer 51 disposed between the first conductive layer 40 and the second conductive layer 50, and bonding the first conductive layer 40 to the second conductive layer 50. In addition, in the circuit board 41, the adhesive layer 51 is formed of the above-described low dielectric adhesive (preferably, a diluent of the low dielectric resin composition).

In order to produce such a circuit board 41, first, as shown in FIG. 5A, a copper foil with carrier 442 is prepared. The copper foil with carrier 442 includes a carrier layer 43 and a copper foil 44 laminated on one side of the carrier layer 43.

The carrier layer 43 is not particularly limited, and examples thereof include known release sheets. The copper foil 44 is laminated on the carrier layer 43 by a known method. The thickness of the copper foil 44 is appropriately set in accordance with its purpose and use. Also, the copper foil 44 is surface-treated if necessary. An example of the surface treatment includes a roughening treatment.

Next, in this method, as shown in FIG. 5B, a first resist layer 45 having a predetermined shape is formed on the one side-surface of the copper foil 44. The first resist layer 45 is formed, for example, by applying a known resist solution to be exposed and developed. Also, the first resist layer 45 can be formed by exposing and etching a dry film resist.

Next, in this method, as shown in FIG. 5C, a first plating layer 46 is formed. The first plating layer 46 is formed, for example, by an electrolytic plating method. In the electrolytic plating method, for example, the carrier layer 43, the copper foil 44, and the first resist layer 45 are immersed in an electrolytic plating solution, and next, electricity is supplied to the copper foil 44. Thus, the first plating layer 46 is formed on the one side-surface of the copper foil 44 in a reverse pattern of the first resist layer 45. That is, the first plating layer 46 has the circuit pattern.

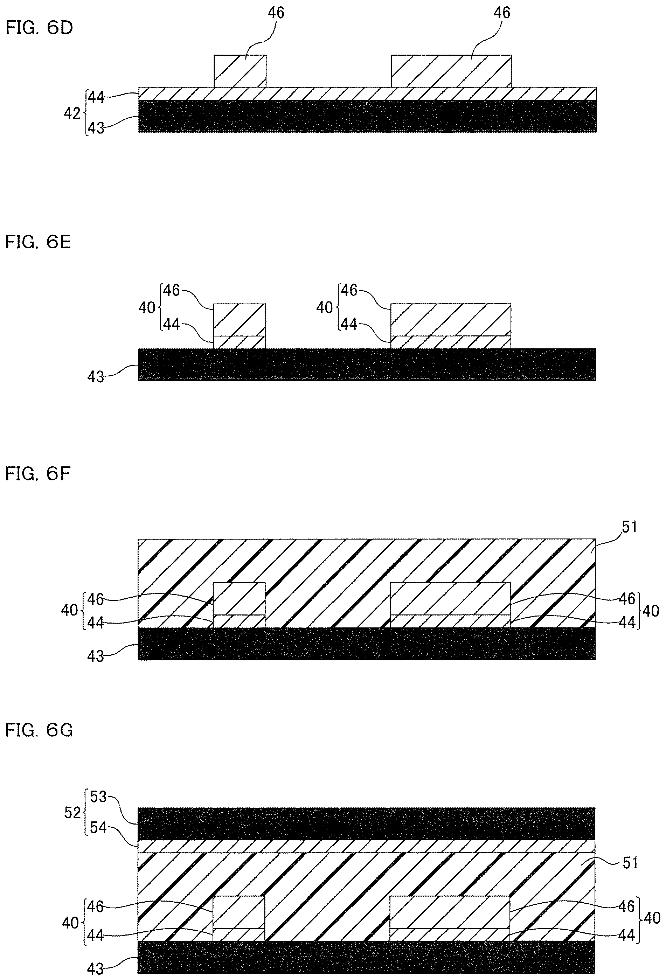

Next, in this method, as shown in FIG. 6D, the first resist layer 45 is removed by a known method. Next, in this method, as shown in FIG. 6E, the copper foil 44 exposed from the first plating layer 46 is removed by a known method. Thus, the first conductive layer 40 including the remaining copper foil 44 which is not removed, and the first plating layer 46 laminated on the copper foil 44 is formed. That is, the first conductive layer 40 includes the copper foil 44 and the first plating layer 46. The first conductive layer 40 preferably consists of the copper foil 44 and the first plating layer 46.

Next, in this method, as shown in FIG. 6F, the adhesive layer 51 made of the low dielectric adhesive is laminated on the carrier layer 43, the first plating layer 46, and the copper foil 44.

More specifically, in this method, for example, a cast film of the low dielectric adhesive is fabricated. Next, the cast film is compressively bonded to the carrier layer 43, the first plating layer 46, and the copper foil 44. Thus, the cast film covers the first plating layer 46 and the copper foil 44. Further, the cast film forms the adhesive layer 51.

On the other hand, in this method, a copper foil with carrier 52 is separately prepared. The copper foil with carrier 52 includes a carrier layer 53 and a copper foil 54 laminated on the other side of the carrier layer 53. Then, in this method, as shown in FIG. 6G, the copper foil 54 of the copper foil with carrier 52 is laminated on the adhesive layer 51.

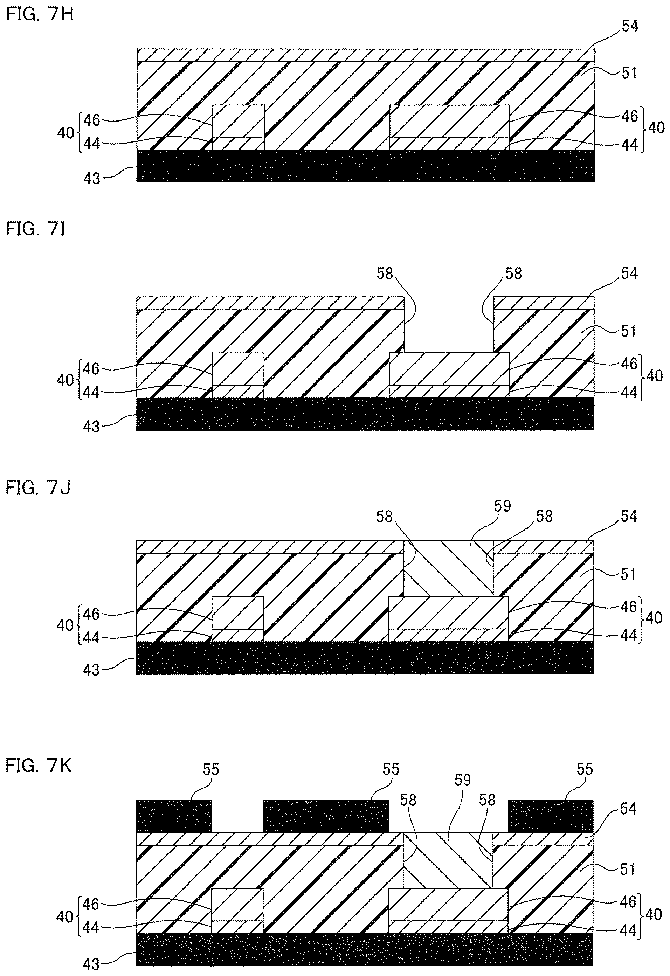

Next, in this method, as shown in FIG. 7H, the carrier layer 53 of the copper foil with carrier 52 is peeled. Next, in this method, as shown in FIG. 7I, the copper foil 54 and the adhesive layer 51 are opened by a known method, thereby forming a via hole 58. Further, the first plating layer 46 is exposed from the via hole 58. Next, in this method, as shown in FIG. 7J, the via hole 58 is filled with an electrically conductive material, thereby forming a via filling 59. An example of the electrically conductive material includes copper.

Next, in this method, as shown in FIG. 7K, a second resist layer 55 having a predetermined shape is formed on the one-side surface of the copper foil 54. The second resist layer 55 is formed, for example, by applying a known resist solution to be exposed and developed. Further, the second resist layer 55 can be also formed from the dry film resist in the same manner as the first resist layer 45.

Next, in this method, as shown in FIG. 8L, a second plating layer 56 is formed. The second plating layer 56 is formed, for example, by the electrolytic plating method. Thus, the second plating layer 56 is formed on the one-side surface of the copper foil 54 in the reverse pattern of the second resist layer 55. That is, the second plating layer 56 has the circuit pattern.

Next, in this method, as shown in FIG. 8M, the second resist layer 55 is removed by a known method. Next, in this method, as shown in FIG. 8N, the copper foil 54 exposed from the second plating layer 56 is removed by a known method. Thus, the second conductive layer 50 including the remaining copper foil 54 which is not removed, and the first plating layer 56 laminated on the copper foil 54 is formed. That is, the second conductive layer 50 includes the copper foil 54 and the second plating layer 56. The second conductive layer 50 preferably consists of the copper foil 54 and the second plating layer 56.

Thereafter, in this method, as shown in FIG. 8O, the carrier layer 43 is peeled. Thus, the copper foil 44 is exposed. As a result, the circuit board 1 is formed.

Then, in the above-described circuit board 41, the first conductive layer 40 is bonded to the second conductive layer 50 by the adhesive layer 51 (low dielectric adhesive). That is, the circuit board 41 has the adhesive layer 51. Then, the adhesive layer 51 (low dielectric adhesive) includes the above-described low dielectric resin composition. Therefore, in the circuit board 41, the adhesive layer 51 (low dielectric adhesive) has the excellent adhesiveness and the excellent low dielectric property, and furthermore, has the excellent heat resistance.

### Examples

Next, the present invention is described based on Examples and Comparative Examples. The present invention is however not limited by these Examples and Comparative Examples. All designations of "part" or "parts" and "%" mean part or parts by mass and % by mass, respectively, unless otherwise particularly specified. The specific numerical values in mixing ratio (content ratio), property value, and parameter used in the following description can be replaced with upper limit values (numerical values defined as "or less" or "below") or lower limit values (numerical values defined as "or more" or "above") of corresponding numerical values in mixing ratio (content ratio), property value, and parameter described in the above-described "DESCRIPTION OF EMBODIMENTS".

### 1. Preparation of Raw Material

### Preparation Example 1-1 (Styrene-Based Elastomer)

As shown in Tables 1 to 4, the following commercially available products were prepared as the styrene-based elastomers.
SEPTON 2063: styrene-ethylene-propylene-styrene copolymer (SEPS), styrene unit amount of 13% by mass, weight average molecular weight (Mw) of 100000
SEPTON 2002: styrene-ethylene-propylene-styrene copolymer (SEPS), styrene unit amount of 30% by mass, weight average molecular weight (Mw) of 55000
Kraton G1730: styrene-ethylene-propylene-styrene copolymer (SEPS), styrene unit amount of 20% by mass, weight average molecular weight (Mw) of 93000
Kraton G1652: styrene-ethylene-butylene-styrene copolymer (SEBS), styrene unit amount of 30% by mass, weight average molecular weight (Mw) of 75000
SEPTON 1020: styrene-ethylene-propylene copolymer (SEP), styrene unit amount of 36% by mass, weight average molecular weight (Mw) of 120000
SEPTON 4033: styrene-ethylene-ethylene-propylene-styrene copolymer (SEEPS), styrene unit amount of 30% by mass, weight average molecular weight (Mw) of 88000
SEPTON 2104: styrene-ethylene-propylene-styrene copolymer (SEPS), styrene unit amount of 65% by mass, weight average molecular weight (Mw) of 60000

### Preparation Example 2-1 (Cyclic Olefin-Based Polymer (B-1))

### (1) Catalyst Preparation Step

VO(OC₂H₅)Cl₂ was diluted with cyclohexane, thereby obtaining a vanadium catalyst solution. The vanadium concentration of the catalyst solution was 6.7 mmol/L.

Further, ethylaluminum sesquichloride (Al(C₂H₅)_{1.5}Cl_{1.5})) was diluted with cyclohexane, thereby obtaining an aluminum catalyst solution. The aluminum concentration of the catalyst solution was 107 mmol/L.

### (2) Polymerization Step

By using a stirring-type polymerization vessel (inner diameter of 500 mm, reaction volume of 100 L), ethylene and tetracyclo[4.4.0.12,5.17,10]-3-dodecene were continuously supplied to be copolymerized. The ratio of the ethylene to the tetracyclo[4.4.0.12,5.17,10]-3-dodecene was adjusted, so that the glass transition temperature (Tg) of the cyclic olefin-based polymer was adjusted.

Further, the above-described vanadium catalyst solution was supplied to the polymerization vessel so that the vanadium catalyst concentration with respect to the cyclohexane in the polymerization vessel was 0.6 mmol /L. Further, the above-described aluminum catalyst solution was supplied to the polymerization vessel so that a mole ratio (Al/V) of the aluminum to the vanadium was 12.0. Further, a polymerization temperature was set to 12°C. Further, polymerization pressure was set to 3.1 kg/cm²G (gauge pressure).

Thus, a copolymer of the ethylene and the tetracyclo[4.4.0.1^{2,5} 1^{7,10}]-3-dodecene (cyclic olefin-based polymer (B-1)) was obtained. The copolymer was obtained as a solution of the cyclohexane (solvent).

### (3) Decalcification Step

The solution of the copolymer was removed from the polymerization vessel. Then, a NaOH solution having the concentration of 25% by mass was added to the solution of the copolymer. Thus, the reaction was stopped. Further, thus, the catalyst residue was removed from the solution of the copolymer (decalcification step). In the solution, the concentration of the copolymer was 7.7% by mass.

As a stabilizer, pentaerythritol-tetrakis[3-(3,5-di-t-butyl-4-hydroxyphenyl)propionate] was added to the solution of the copolymer. The addition amount of the stabilizer was 0.4 parts by mass with respect to 100 parts by mass of the copolymer.

Thereafter, the solution of the copolymer was stirred for one hour using a stirring tank (effective volume of 1.0 cm³). The solid content concentration of the copolymer was 5% by mass.

### (4) Desolvation Step

The solution of the copolymer (solid content concentration of 5% by mass) was supplied to a double-tube heater (outer tube diameter of 2B, inner tube diameter of 3/4B, length of 21 m, heat source of 20 kg/cm² G water vapor) to be heated at 180°C. A feeding rate was 150 kg/H.

Next, the cyclohexane was removed from the solution of the copolymer using a double-tube flash dryer (outer tube diameter of 2B, inner tube diameter of 3/4B, length of 27 m, heat source of 20 kg/cm²G water vapor) and a flash hopper (volume of 200 L). Further, an unreacted monomer was removed together with the cyclohexane.

Thus, the cyclic olefin-based polymer (B-1) in a melted state was obtained. The glass transition temperature (Tg) of the cyclic olefin-based polymer (B-1) was measured in conformity with JIS K 7122 (2012). As a result, the glass transition temperature (Tg) of the cyclic olefin-based polymer (B-1) was 105°C. Further, the weight average molecular weight (in terms of polystyrene, gel permeation chromatography measurement) of the cyclic olefin-based polymer (B-1) was 113000.

### Preparation Example 2-2 (Cyclic Olefin-Based Polymer (B-2))

A cyclic olefin-based polymer (B-2) was obtained in the same manner as Preparation Example 2-1. However, a composition ratio of the ethylene and the tetracyclo[4.4.0.1^{2,5}.1^{7,10}]-3-dodecene was changed, thereby adjusting the glass transition temperature (Tg) of the cyclic olefin-based polymer.

The glass transition temperature (Tg) of the cyclic olefin-based polymer (B-2) was 125°C. Further, the weight average molecular weight (in terms of polystyrene, gel permeation chromatography measurement) of the cyclic olefin-based polymer (B-2) was 116000.

### Preparation Example 2-3 (Cyclic Olefin-Based Polymer (B-3))

A cyclic olefin-based polymer (B-3) was obtained in the same manner as Preparation Example 2-1. However, the composition ratio of the ethylene and the tetracyclo[4.4.0.1^{2,5}.1^{7,10}]-3-dodecene was changed, thereby adjusting the glass transition temperature (Tg) of the cyclic olefin-based polymer.

The glass transition temperature (Tg) of the cyclic olefin-based polymer (B-3) was 65°C. Further, the weight average molecular weight (in terms of polystyrene, gel permeation chromatography measurement) of the cyclic olefin-based polymer (B-3) was 110000.

### Preparation Example 3-1 (Another Olefin-Based Polymer (C-1))

A 2-L nitrogen-substituted autoclave was charged with 900 mL of hexane and 90 g of 1-buten. In addition, 1 mmol of triisobutylaluminum was added to the autoclave. The temperature of the inside of the autoclave was increased to 70°C.

Next, 0.30 mmol of methylaluminoxane was added to the autoclave. In addition, 0.001 mmol of rac-dimethylsilylene-bis{1-(2-methyl-4-phenylindenyl)}zirconium dichloride in terms of Zr was added to the autoclave.

Thereafter, the propylene was continuously supplied to the autoclave. Then, the 1-butene and the propylene were polymerized for 30 minutes, while the total pressure was maintained at 7 kg/cm²G. A random copolymer of the 1-butene and the propylene (another olefin-based polymer (C-1)) was obtained.

The autoclave was degassed, and the copolymer (the other olefin-based polymer (C-1)) was collected by methanol. Thereafter, the copolymer (the other olefin-based polymer (C-1)) was dried under reduced pressure at 110°C for 12 hours.

A melting point (Tm) of the other olefin-based polymer (C-1) was measured in conformity with JIS K 7122 (2012). As a result, the melting point (Tm) of the other olefin-based polymer (C-1) was 78.3°C. Further, the weight average molecular weight (Mw) of the other olefin-based polymer (C-1) was 300,000.

### Preparation Example 3-2 (Another Olefin-Based Polymer (C-2))

The following commercially available product was prepared as another olefin-based polymer (C-2).

Trade name: Vistamaxx 6102: propylene-ethylene copolymer (PER), styrene unit amount of 0% by mass, weight average molecular weight (Mw) of 320000, melting point of 107°C, manufactured by ExxonMobil Japan G.K.

### Preparation Example 3-3 (Another Olefin-Based Polymer (C-3))

The following commercially available product was prepared as another olefin-based polymer (C-3).

Trade name: Vistamaxx 3020FL: propylene-ethylene copolymer (PER), styrene unit amount of 0% by mass, weight average molecular weight (Mw) of 370000, melting point of 64°C, manufactured by ExxonMobil Japan G.K.

### 2. ·Preparation of Resin Composition

### Example 1 (Low Dielectric Resin Composition (D-1))

As the resin component, 50 parts by mass of SEPTON 2063 (SEPS, Mw of 100,000, styrene unit amount of 13%) and 50 parts by mass of cyclic olefin-based polymer (B-1) were prepared.

As the modifier, maleic anhydride (MAH) was added to the resin component at a ratio of 1 part by mass with respect to 100 parts by mass of the total amount of the resin component.

Further, 2,5-dimethyl-2,5-bis(t-butylperoxy)hexane (peroxide, modified initiator) was added to the resin component. The addition amount of the 2,5-dimethyl-2,5-bis(t-butylperoxy)hexane was 0.6 parts by mass with respect to 100 parts by mass of the total amount of the resin component.

Then, the resin component was melted and kneaded at 230°C using a vent-including double-axis kneading extruder. Thus, a low dielectric resin composition (D-1) was obtained. In the following, the low dielectric resin composition is simply referred to as a resin composition.

The resin composition (D-1) was cooled and pelleted. Thereafter, 100 parts by mass of the pellet of the resin composition (D-1) was dissolved in 400 parts by mass of toluene under the heated environment. Thus, a solution of the resin composition (D-1) (solid content concentration of 20% by mass) was obtained.

### Examples 2 to 13 and Comparative Examples 1 to 9 (Resin Compositions (D-2) to (D-22))

The resin compositions (D-2) to (D-21) were obtained in the same manner as Example 1, except that the formulations were changed to those shown in Tables 1 to 4. In addition, the solutions (solid content concentration of 20% by mass) of the resin compositions (D-2) to (D-21) were obtained in the same manner as in Example 1. In Example 12, the modifier was not added.

### 3. Evaluation

### (1) Measurement of Relative Dielectric Constant and Measurement of Dielectric Loss Tangent

The solution of the resin composition was applied to a release film (polyethylene terephthalate film, thickness of 100 µm) and dried at 100°C for one minute. Thus, a dried coating film (film thickness of about 60 µm) of the resin composition was obtained.

The dried coating film was molded into a strip shape, and the relative dielectric constant and the dielectric loss tangent of the dried coating film were measured in conformity with JIS R1641 (2007). In addition, in the measurement, a cavity resonator (Vector Network Analyzer HP8510B, (manufactured by Keysight Technologies)) was used. Further, a measurement frequency was 10 GHz.

### (2) Compatibility (Affinity for Thermosetting Resin)

As the thermosetting resin, a polyphenylene ether (hereinafter, PPE) was prepared. The PPE was dissolved in toluene, thereby obtaining a solution of the PPE.

The solution of the PPE and the solution of the above-described resin composition were mixed, thereby obtaining a solution mixture. A mass ratio of the PPE to the resin composition (PPE: resin composition) was 7:3.

The above-described solution mixture was applied to a glass plate and dried at 100°C for one minute. Thus, a dried coating film (film thickness of about 30 µm) of a resin mixture was obtained.

A haze of the dried coating film was measured in conformity with JIS K7136 (2000). In the measurement, a haze meter (NDH 4000 (manufactured by NIPPON DENSHOKU INDUSTRIES CO., LTD.) was used. Then, a degree of transparency of the dried coating film was evaluated by a haze value and visual observation. The criteria for evaluation are described as follows.

5: The entire coating film is uniform. Further, the haze is below 25.
4: The entire coating film is uniform. Further, the haze is 25 or more.
3: The coating film is phase-separated. A phase-separated portion is uniformly distributed throughout the coating film.
2: The coating film is phase-separated. A phase-separated portion is non-uniform. The maximum length of a non-uniform portion is below 1 cm.
1: The coating film is phase-separated. A phase-separated portion is non-uniform. The maximum length of a non-uniform portion is 1 cm or more.

When the affinity of the resin composition for the thermosetting resin is improved, the adhesiveness is also improved. Further, when the affinity of the resin composition for the thermosetting resin is improved, the strength of the molded product is also improved.

### (3) Heat Resistance

As the thermal initiator, 2,5-dimethyl-2,5-bis(t-butylperoxy)hexane (trade name: PERHEXYNE 25B, manufactured by NOF CORPORATION) was added to the solution of the resin composition. A solid content mass of the thermal initiator was 3 parts by mass with respect to 100 parts by mass of the total amount of the solid content of the resin component of the resin composition.

Next, the solution of the resin composition to which the thermal initiator was added was put in a Teflon (registered trademark) Schale and dried at 100°C for one minute. Thus, the dried coating film (film thickness of about 100 µm) of the resin composition was obtained.

The dried coating film of the resin composition was subjected to a heat treatment at 200°C for three hours. Thereafter, a shear storage modulus (G') of the dried coating film of the resin composition was measured. In the measurement, a viscoelasticity measurement device (MCR302 (manufactured by Anton Paar Japan KK)) was used. Further, the measurement conditions were as follows.

Temperature range: 0°C to 200°C
Temperature rising rate: 2°C/min
Operation conditions: shear mode
Frequency: 1 Hz

Then, the heat resistance of the dried coating film was evaluated by a shear storage modulus (G'). The criteria for evaluation are described as follows.

○: The shear storage modulus (G') at 200°C is 1500 Pa or more.
△: The shear storage modulus (G') at 200°C is 1000 Pa or more and below 1500 Pa.
×: The shear storage modulus (G') at 200°C is below 1000 Pa.

### (4) Solubility for Solvent

The solution of the resin composition (solid content concentration of 20% by mass, toluene solution) was visually confirmed, and the solubility of the resin composition for the toluene was evaluated. The criteria for evaluation are described as follows.

○: When the resin composition and the solvent are stirred and left to stand, the solution is in a uniform liquid state.
△: A mixture of the resin composition and the solvent is a uniform gel state.
×: A precipitate is confirmed in a mixture of the resin composition and the solvent. Further, the entire mixture is non-uniform.

### [Table 1]

**Table 1**

| No. | | Ex. 1 | Ex. 2 | Ex. 3 | Ex. 4 | Ex. 5 | Ex. 6 |
|---|---|---|---|---|---|---|---|
| | | D-1 | D-2 | D-3 | D-4 | D-5 | D-6 |
| Styrene-Based Elastomer | Kind | SEPTON 2063 | SEPTON 2002 | Kraton G1730 | Kraton G1730 | SEPTON 2002 | Kraton G1652 |
| | | SEPS | SEPS | SEPS | SEPS | SEPS | SEBS |
| | Styrene Unit Amount (% by mass) | 13 | 30 | 20 | 20 | 30 | 30 |
| | Weight Average Molecular Weight | 100000 | 55000 | 93000 | 93000 | 55000 | 75000 |
| | Mixing Amount (parts by mass) | 50 | 50 | 50 | 75 | 75 | 75 |
| Cyclic Olefin-Based Polymer | Kind | B-1 | B-1 | B-1 | B-1 | B-1 | B-1 |
| | Glass Transition Temperature (°C) | 105 | 105 | 105 | 105 | 105 | 105 |
| | Mixing Amount (parts by mass) | 50 | 50 | 50 | 25 | 25 | 25 |
| Another Olefin-Based Polymer | Kind | - | - | - | - | - | - |
| | Mixing Amount (parts by mass) | - | - | - | - | - | - |
| Modifier | Kind | MAH | MAH | MAH | MAH | MAH | MAH |
| | Mixing Amount (parts by mass) | 1 | 1 | 1 | 1 | 1 | 1 |
| Relative Dielectric Constant | | 2.24 | 2.32 | 2.16 | 2.32 | 2.32 | 2.22 |
| Dielectric Loss Tangent | | 0.0009 | 0.0009 | 0.0006 | 0.0009 | 0.0009 | 0.001 |
| Compatibility | | 3 | 5 | 3 | 2 | 5 | 4 |
| Heat Resistance | | ○ | ○ | ○ | ○ | ○ | ○ |
| Solubility | | ○ | ○ | ○ | ○ | ○ | ○ |

### [Table 2]

**Table 2**

| No. | | Ex. 7 | Ex. 8 | Ex. 9 | Ex. 10 | Ex. 11 | Ex. 12 | Ex. 13 |
|---|---|---|---|---|---|---|---|---|
| | | D-7 | D-8 | D-9 | D-10 | D-11 | D-12 | D-13 |
| Styrene-Based Elastomer | Kind | Kraton G1652 | SEPTON 1020 | SEPTON 4033 | SEPTON 2104 | SEPTON 2002 | SEPTON 2002 | SEPTON 2002 |
| | | SEBS | SEP | SEEPS | SEPS | SEPS | SEPS | SEPS |
| | Styrene Unit Amount (% by mass) | 30 | 36 | 30 | 65 | 30 | 30 | 30 |
| | Weight Average Molecular Weight | 75000 | 120000 | 88000 | 60000 | 55000 | 55000 | 55000 |
| | Mixing Amount (parts by mass) | 50 | 50 | 50 | 50 | 50 | 50 | 50 |
| Cyclic Olefin-Based Polymer | Kind | B-1 | B-1 | B-1 | B-1 | B-2 | B-1 | B-3 |
| | Glass Transition Temperature (°C) | 105 | 105 | 105 | 105 | 125 | 105 | 65 |
| | Mixing Amount (parts by mass) | 50 | 50 | 50 | 50 | 50 | 50 | 50 |
| Another Olefin-Based Polymer | Kind | - | - | - | - | - | - | - |
| | Mixing Amount (parts by mass) | - | - | - | - | - | - | - |
| Modifier | Kind | MAH | MAH | MAH | MAH | MAH | - | MAH |
| | Mixing Amount (parts by mass) | 1 | 1 | 1 | 1 | 1 | - | 1 |
| Relative Dielectric Constant | | 2.27 | 2.31 | 2.25 | 2.35 | 2.31 | 2.20 | 2.22 |
| Dielectric Loss Tangent | | 0.0009 | 0.0010 | 0.0011 | 0.0011 | 0.0008 | 0.0006 | 0.0008 |
| Compatibility | | 4 | 5 | 5 | 5 | 2 | 5 | 5 |
| Heat Resistance | | ○ | ○ | ○ | ○ | ○ | ○ | △ |
| Solubility | | ○ | ○ | ○ | ○ | ○ | ○ | ○ |

### [Table 3]

**Table 3**

| No. | | Comparative Ex.1 | Comparative Ex.2 | Comparative Ex.3 | Comparative Ex.4 | Comparative Ex.5 | Comparative Ex.6 |
|---|---|---|---|---|---|---|---|
| | | D-14 | D-15 | D-16 | D-17 | D-18 | D-19 |
| Styrene-Based Elastomer | Kind | - | SEPTON 2002 | Kraton G1652 | SEPTON 2002 | SEPTON 2002 | SEPTON 2002 |
| | | - | SEPS | SEBS | SEPS | SEPS | SEPS |
| | Styrene Unit Amount (% by mass) | - | 30 | 30 | 30 | 30 | 30 |
| | Weight Average Molecular Weight | - | 55000 | 75000 | 55000 | 55000 | 55000 |
| | Mixing Amount (parts by mass) | - | 100 | 50 | 50 | 50 | 50 |
| Cyclic Olefin-Based Polymer | Kind | B-1 | - | - | - | - | - |
| | Glass Transition Temperature (°C) | 105 | - | - | - | - | - |
| | Mixing Amount (parts by mass) | 100 | - | - | - | - | - |
| Another Olefin-Based Polymer | Kind | - | - | - | C-1 | C-2 | C-3 |
| | Mixing Amount (parts by mass) | - | - | - | 50 | 50 | 50 |
| Modifier | Kind | MAH | MAH | MAH | MAH | MAH | MAH |
| | Mixing Amount (parts by mass) | 1 | 1 | 1 | 1 | 1 | 1 |
| Relative Dielectric Constant | | 2.35 | 2.38 | 2.26 | 2.22 | 2.23 | 2.23 |
| Dielectric Loss Tangent | | 0.0013 | 0.0006 | 0.0003 | 0.0008 | 0.0008 | 0.0008 |
| Compatibility | | 1 | 5 | 3 | 1 | 3 | 3 |
| Heat Resistance | | ○ | × | × | × | × | × |
| Solubility | | ○ | Δ | ○ | Δ | ○ | ○ |

### [Table 4]

**Table 4**

| No. | | Comparative Ex. 7 | Comparative Ex. 8 | Comparative Ex. 9 |
|---|---|---|---|---|
| | | D-20 | D-21 | D-22 |
| Styrene-Based Elastomer | Kind | SEPTON 2002 | SEPTON 2002 | SEPTON 2002 |
| | | SEPS | SEPS | SEPS |
| | Styrene Unit Amount (% by mass) | 30 | 30 | 30 |
| | Weight Average Molecular Weight | 55000 | 55000 | 55000 |
| | Mixing Amount (parts by mass) | 10 | 25 | 90 |
| Cyclic Olefin-Based Polymer | Kind | B-1 | B-1 | B-1 |
| | Glass Transition Temperature (°C) | 105 | 105 | 105 |
| | Mixing Amount (parts by mass) | 90 | 75 | 10 |
| Another Olefin-Based Polymer | Kind | - | - | - |
| | Mixing Amount (parts by mass) | - | - | - |
| Modifier | Kind | MAH | MAH | MAH |
| | Mixing Amount (parts by mass) | 1 | 1 | 1 |
| Relative Dielectric Constant | | 2.32 | 2.12 | 2.22 |
| Dielectric Loss Tangent | | 0.002 | 0.0013 | 0.0008 |
| Compatibility | | 1 | 1 | 3 |
| Heat Resistance | | ○ | ○ | × |
| Solubility | | ○ | ○ | ○ |

The details of abbreviations in Tables are described below:
Styrene unit amount: content ratio (% by mass) of structural unit derived from styrene SEPTON 2063: styrene-ethylene-propylene-styrene copolymer (SEPS), stryrene unit amount of 13% by mass, weight average molecular weight (Mw) of 100000, manufactured by KURARY CO., LTD.
SEPTON 2002: styrene-ethylene-propylene-styrene copolymer (SEPS), styrene unit amount of 30% by mass, weight average molecular weight (Mw) of 55000, manufactured by KURARAY CO., LTD.
Kraton G1730: styrene-ethylene-propylene-styrene copolymer (SEPS), styrene unit amount of 20% by mass, weight average molecular weight (Mw) of 93000, manufactured by Kraton Polymer Japan Corporation
Kraton G1652: styrene-ethylene-butylene-styrene copolymer (SEBS), styrene unit amount of 30% by mass, weight average molecular weight (Mw) of 75000, manufactured by Kraton Polymer Japan Corporation
SEPTON 1020: styrene-ethylene-propylene copolymer (SEP), styrene unit amount of 36% by mass, weight average molecular weight (Mw) of 120000, manufactured by KURARAY CO., LTD.
SEPTON 4033: styrene-ethylene-ethylene-propylene-styrene copolymer (SEEPS), styrene unit amount of 30% by mass, weight average molecular weight (Mw) of 88000, manufactured by KURARAY CO., LTD.
SEPTON 2104: styrene-ethylene-propylene-styrene copolymer (SEPS), styrene unit amount of 65% by mass, weight average molecular weight (Mw) of 60000, manufactured by KURARAY CO., LTD.
MAH: modifier, carboxy group-containing maleic anhydride monomer

While the illustrative embodiments of the present invention are provided in the above description, such is for illustrative purpose only and it is not to be construed as limiting the scope of the present invention. Modification and variation of the present invention that will be obvious to those skilled in the art is to be covered by the following claims.

### INDUSTRIAL APPLICATION

The low dielectric resin composition, the adhesiveness-imparting agent, the low dielectric adhesive composition, the low dielectric adhesive molded product, the low dielectric adhesive, and the laminate of the present invention are preferably used in the circuit board field.

## Claims

1. A low dielectric resin composition comprising:
a polyolefin-based resin, wherein
the polyolefin-based resin includes
a styrene-based elastomer (A) and
a cyclic olefin-based polymer (B) having an alicyclic ring in a main chain, and
a content ratio of the styrene-based elastomer (A) is 30 parts by mass or more and 89 parts by mass or less with respect to 100 parts by mass of the total amount of the styrene-based elastomer (A) and the cyclic olefin-based polymer (B).

2. The low dielectric resin composition according to claim 1, wherein
the styrene-based elastomer (A) has a weight average molecular weight of 70000 or more and 110000 or less.

3. The low dielectric resin composition according to claim 1, wherein
the styrene-based elastomer (A) contains a structural unit derived from styrene, and a content ratio of the structural unit derived from the styrene is 10% by mass or more and 40% by mass or less with respect to the total amount of the styrene-based elastomer (A).

4. The low dielectric resin composition according to claim 1, wherein
the styrene-based elastomer (A) does not contain a structural unit derived from butylene.

5. The low dielectric resin composition according to claim 1, wherein
the cyclic olefin-based polymer (B) has a glass transition temperature of 100°C or more and 140°C or less.

6. The low dielectric resin composition according to claim 1, wherein
the polyolefin-based resin is modified by a functional group-containing monomer.

7. The low dielectric resin composition according to claim 6, wherein
the functional group-containing monomer includes a carboxy group-containing monomer.

8. An adhesiveness-imparting agent comprising:
the low dielectric resin composition according to claim 1.

9. A low dielectric adhesive composition comprising:
a thermosetting resin and the adhesiveness-imparting agent according to claim 8, wherein the thermosetting resin includes at least one kind selected from the group consisting of epoxy resins, polyphenylene ether resins, fluorine resins, polyimide resins, phenol resins, melamine resins, polyolefin resins having an unsaturated double bond, and liquid crystal polymers.

10. A low dielectric adhesive molded product comprising:
a cured product of the low dielectric adhesive composition according to claim 9.

11. A laminate comprising:
an insulating layer including the low dielectric adhesive molded product according to claim 10 and
a conductive layer disposed on at least one surface of the insulating layer.

12. A low dielectric adhesive comprising:
the low dielectric resin composition according to claim 1.

13. A laminate comprising:
an insulating layer,
a conductive layer disposed facing the insulating layer, and
an adhesive layer disposed between the insulating layer and the conductive layer and bonding the insulating layer to the conductive layer, wherein
the adhesive layer includes the low dielectric adhesive according to claim 12.

14. A laminate comprising:
a first conductive layer,
a second conductive layer disposed facing the first conductive layer, and
an adhesive layer disposed between the first conductive layer and the second conductive layer and bonding the first conductive layer to the second conductive layer, wherein
the adhesive layer includes the low dielectric adhesive according to claim 12.
